# EUROPEAN PATENT SPECIFICATION

(11) **EP 0 854 752 B1**
(45) Date of publication and mention of the grant of the patent: **03.08.2005**
(21) Application number: 96933193.3
(22) Date of filing: 27.09.1996
(51) Int. Cl.: B01D 53/88, B01D 53/74, B01D 53/04, B60H 3/00, B60H 3/06, B60H 1/00, B60H 1/32, B01D 53/86

(54) **CLEANING AMBIENT AIR BY THE MOVEMENT OF A VEHICLE HAVING A POLLUTANT TREATING SURFACE**
UMGEBUNGSLUFTREINIGUNG MITTELS DER BEWEGUNG EINES FAHRZEUGS, WELCHES EINE OBERFLÄCHE ZUR SCHADSTOFFBEHANDLUNG ENTHÄLT
EPURATION DE L'AIR AMBIANT PAR LE MOUVEMENT D'UN VEHICULE COMPORTANT UNE SURFACE DE TRAITEMENT DES POLLUANTS

(30) Priority: 29.09.1995 US 537206; 29.09.1995 US 537208; 27.10.1995 US 549996; 19.01.1996 US 588972; 19.01.1996 US 589030; 19.01.1996 US 589032; 19.01.1996 US 589182; 16.07.1996 US 682174
(43) Date of publication of application: 29.07.1998
(73) Proprietor: ENGELHARD CORPORATION, Iselin, New Jersey 08830-0770 (US)
(72) Inventor: HOKE, Jeffrey, B., North Brunswick, NJ 08902 (US); ALLEN, Fred, M., Princeton Junction, NJ 08550 (US); BLOSSER, Patrick, W., East Windsor, NJ 08520 (US); HU, Zhicheng, Edison, NJ 08820 (US); HECK, Ronald, M., Frenchtown, NJ 08825 (US)
(74) Representative: Fisher, Adrian John
(86) International application number: PCT/US1996/015634
(87) International publication number: WO 1997/011769

(56) References cited:
- EP-A- 0 097 287
- EP-A- 0 351 036
- WO-A-96/22146
- WO-A-96/22148
- DE-A- 2 549 621
- DE-A- 3 019 828
- DE-A- 3 334 992
- DE-A- 4 007 965
- DE-C- 4 318 738
- DE-U- 9 415 457
- US-A- 5 145 822
- US-A- 5 283 041
- DATABASE WPI Section Ch, Week 8039 Derwent Publications Ltd., London, GB; Class J01, AN 80-68830C XP002004499 & JP 55 106 813 A (MATSUSHITA ELEC IND KK) , 17 August 1980
- DATABASE WPI Section Ch, Week 8614 Derwent Publications Ltd., London, GB; Class E36, AN 86-090619 XP002012140 & JP 61 035 853 A (NIKKI UNIVERSAL CO LTD) , 20 February 1986
- DATABASE WPI Section Ch, Week 9312 Derwent Publications Ltd., London, GB; Class E17, AN 93-096487 XP002012141 & JP 05 038 443 A (MATSUSHITA ELEC IND CO LTD) , 19 February 1993
- DATABASE WPI Section Ch, Week 7804 Derwent Publications Ltd., London, GB; Class A88, AN 78-07449A XP002012142 & JP 52 148 468 A (ICE KK) , 9 December 1977
- DATABASE WPI Section Ch, Week 8128 Derwent Publications Ltd., London, GB; Class A81, AN 81-50528D XP002012143 & JP 56 059 671 A (FUJI TITAN KOGYO KK) , 23 May 1981

## Description

### BACKGROUND OF THE INVENTION

### Field Of The Invention

The present invention relates to a catalytic slurry for application to a substrate, and to a method of forming such a slurry.

### Discussion of the Related Art

A review of literature relating to pollution control reveals that the general approach is to reactively clean waste streams entering the environment. If too much of one pollutant or another is detected or being discharged, the tendency has been to focus on the source of the pollutant, the cause of the pollutant or the waste stream containing the pollutant. For the most part gaseous streams are treated to reduce the pollutants prior to entering the atmosphere.

It has been disclosed to treat atmospheric air directed into a confined space to remove undesirable components in the air. However, there has been little effort to treat pollutants which are already in the environment; the environment has been left to its own self cleansing systems. References are known which disclose proactively cleaning the environment. U.S. Patent No. 3,738,088 discloses an air filtering assembly for cleaning pollution from the ambient air by utilizing a vehicle as a mobile cleaning device. A variety of elements are disclosed to be used in combination with a vehicle to clean the ambient air as the vehicle is driven through the environment. In particular, there is disclosed ducting to control air stream velocity and direct the air to various filter means. The filter means can include filters and electronic precipitators. Catalyzed postfilters are disclosed to be useful to treat nonparticulate or aerosol pollution such as carbon monoxide, unburned hydrocarbons, nitrous oxide and/or sulfur oxides, and the like. German Patent DE 43 18 738 C1 also discloses a process for the physical and chemical cleaning of outside air. Motor vehicles are used as carriers of conventional filters and/or catalysts, which do not constitute operational components of the vehicle but are used to directly clean atmospheric air.

Another approach is disclosed in U.S. Patent No. 5,147,429. There is disclosed a mobile airborne air cleaning station. In particular this patent features a dirigible for collecting air. The dirigible has a plurality of different types of air cleaning devices contained therein. The air cleaning devices disclosed include wet scrubbers, filtration machines, and cyclonic spray scrubbers.

The difficulty with the above recited devices disclosed to proactively clean the atmospheric air is that they require new and additional equipment. Even the modified vehicle disclosed in U.S. Patent No. 3,738,088 requires ducting and filters which can include catalytic filters.

DE 40 07 965 C2 to Klaus Hager discloses a catalyst comprising copper oxides for converting ozone and a mixture of copper oxides and manganese oxides for converting carbon monoxide. The catalyst can be applied as a coating to a self heating radiator, oil coolers or charged-air coolers. The catalyst coating comprises heat resistant binders which are also gas permeable. It is indicated that the copper oxides and manganese oxides are widely used in gas mask filters and have the disadvantage of being poisoned by water vapor. However, the heating of the surfaces of the automobile during operation evaporates the water. In this way, continuous use of the catalyst is possible since no drying agent is necessary.

Manganese oxides are known to catalyze the oxidation of ozone to form oxygen. Many commercially available types of manganese compound and compositions, including alpha manganese oxide are disclosed to catalyze the reaction of ozone to form oxygen. In particular, it is known to use the cryptomelane form of alpha manganese oxide to catalyze the reaction of ozone to form oxygen.

Alpha manganese oxides are disclosed in references such as O'Young, Hydrothermal Synthesis of Manganese Oxides with Tunnel Structures, Modern Analytical Techniques for Analysis of Petroleum, presented at the Symposium on Advances in Zeolites and Pillared Clay Structures before the Division of Petroleum Chemistry, Inc. American Chemical Society New York City Meeting, August 25-30, 1991 beginning at page 348. Such materials are also disclosed in U.S. Patent No. 5,340,562 to O'Young, et al. Additionally, forms of α-MnO₂ are disclosed in McKenzie, the Synthesis of Birnessite, Cryptomelane, and Some Other Oxides and Hydroxides of Manganese, Mineralogical Magazine, December 1971, Vol. 38, pp. 493-502. For the purposes of the present invention, α-MnO₂ is defined to include hollandite (BaMn₈O₁₆.xH₂O), cryptomelane (KMn₈O₁₆.xH₂O), manjiroite (NaMn₈O₁₆.xH₂O) and coronadite (PbMn₈O₁₆.xH₂O). O'Young discloses these materials to have a three dimensional framework tunnel structure (U.S. Patent No. 5,340,562 and O'Young Hydrothermal Synthesis of Manganese Oxides with Tunnel Structures both hereby incorporated by reference). For the purposes of the present invention, α-MnO₂ is considered to have a 2 x 2 tunnel structure and to include hollandite, cryptomelane, manjiroite and coronadite.

### SUMMARY OF THE INVENTION

The present invention relates to a catalytic slurry, as defined in claim 1. The slurry may be applied to a substrate to treat the atmosphere. For the purposes of the present invention atmosphere is defined as the mass of air surrounding the earth.

The slurry may be applied to an atmosphere contacting surface of a vehicle. The atmosphere contacting surface is a surface of a component of the vehicle that is in direct contact with the atmosphere. Preferred and useful atmosphere contacting surfaces include body surfaces, wind deflector surfaces, grill surfaces, mirror backs and the surfaces of "under the hood" components. Preferred atmosphere contacting surfaces are located within the body of the motor vehicle, typically in proximity to the engine, i.e., the engine compartment. The surfaces are preferably the surfaces of cooling means which comprise an in flow path for liquids or gases through a coolant walled enclosure such as tubes or a housing and an outer surface on which is located fins to enhance heat transfer. Preferred atmosphere contacting surfaces comprise a finned outer surface and are selected from the outer surfaces of the radiator, air conditioner condenser, the surfaces of the radiator fan, engine oil cooler, transmission oil cooler, power steering fluid cooler and air charge cooler also referred to as an intercooler or after cooler. The most preferred atmosphere contacting surfaces are the outer surfaces of the air conditioner condenser and radiator due to their large surface area and relatively high ambient operating temperatures of from about 40°C to 135°C and typically up to 110°C.

An advantage of the present invention is that the atmosphere contacting surface useful to support a pollution treating composition can be the surface of existing vehicle components. No additional filter, or apparatus to support a pollutant treating composition, is required. Accordingly, the apparatus and method of the present invention can be located on existing components of new cars or retrofitted onto old cars. Retrofitting may comprise coating a suitable pollutant treating composition on an existing vehicle surface which comes in contact with atmospheric air as the vehicle is driven through the atmosphere.

The present invention relates to compositions, methods and articles to treat pollutants in air. Such pollutants may typically comprise from 0 to 400 parts, more typically 1 to 300, and yet more typically 1 to 200, parts per billion (ppb) ozone; 0 to 30 parts, and more typically 1 to 20, parts per million (ppm) carbon monoxide; and 2 to 3000 ppb unsaturated hydrocarbon compounds such as C₂ to about C₂₀ olefins and partially oxygenated hydrocarbons such as alcohols, aldehydes, esters, ethers, ketones and the like. Typical hydrocarbons which can be treated include, but are not limited to, propylene, butylene, formaldehyde and other airborne hydrocarbon gases and vapors. Other pollutants present may include nitrogen oxides and sulfur oxides. The National Ambient Air Quality Standard for ozone is 120 ppb, and for carbon monoxide is 9 ppm.

Pollutant treating compositions include catalyst compositions useful for catalyzing the conversion of pollutants present in the atmosphere to non-objectionable materials. Alternatively, adsorption compositions can be used as the pollutant treating composition to adsorb pollutants which can be destroyed upon adsorption, or stored for further treatment at a later time.

Catalyst compositions can be used which can assist in the conversion of the pollutants to harmless compounds or to less harmful compounds. Useful and preferred catalyst compositions include compositions which catalyze the reaction of ozone to form oxygen, catalyze the reaction of carbon monoxide to form carbon dioxide, and/or catalyze the reaction of hydrocarbons to form water and carbon dioxide. Specific and preferred catalysts to catalyze the reaction of hydrocarbons are useful for catalyzing the reaction of low molecular weight unsaturated hydrocarbons having from two to twenty carbons and at least one double bond, such as C₂ to about C₈ mono-olefins. Such low molecular weight hydrocarbons have been identified as being sufficiently reactive to cause smog. Particular olefins which can be reacted include propylene and butylene. A useful and preferred catalyst can catalyze the reactions of both ozone and carbon monoxide; and preferably ozone, carbon monoxide and hydrocarbons.

Ozone - Useful and preferred catalyst compositions to treat ozone include a composition comprising manganese compounds including oxides such as Mn₂O₃ and MnO₂ with a preferred composition comprising α-MnO₂, and cryptomelane being most preferred.

The above compositions can be applied by coating to at least one atmosphere contacting vehicle surface. Particularly preferred compositions catalyze the destruction of ozone, carbon monoxide and/or unsaturated low molecular weight olefinic compounds at ambient conditions or ambient operating conditions. Ambient conditions are the conditions of the atmosphere. By ambient operating conditions it is meant the conditions, such as temperature, of the atmosphere contacting surface during normal operation of the vehicle without the use of additional energy directed to heating the pollutant treating composition. Certain atmosphere contacting surfaces such as a grill or wind deflector can be at the same or similar temperature as the atmosphere. It has been found that preferred catalysts which catalyze the reaction of ozone can catalyze the reaction of ozone at ambient conditions in ranges as low as 5°C to 30°C.

Atmosphere contacting surfaces may have higher temperatures than the ambient atmospheric temperatures due to the nature of the operation of the component underlying the surface. For example, preferred atmosphere contacting surfaces are the surfaces of the air conditioning condenser and the radiator due to their high surface area. Where vehicles use air charge coolers, these are preferred due to high surface area and operating temperatures of from ambient to 250°F. Normally, during ambient operating conditions the surfaces of these components increase to higher temperature levels than the ambient environment due to the nature of their operation. After the vehicle motor has warmed up, these components are typically at temperatures which range up to about 130°C and typically from 40°C to 110°C. The temperature range of these atmosphere contacting surfaces helps to enhance the conversion rates of the ozone, carbon monoxide and hydrocarbon catalysts supported on such surfaces. Air charge coolers operate at temperatures up to about 130°C and typically from 60°C to 130°C.

Various of the catalyst compositions can be combined, and a combined coating applied to the atmosphere contacting surface. Alternatively, different surfaces or different parts of the same surface can be coated with different catalyst compositions.

The method of the present invention is designed so that the pollutants can be treated at ambient atmospheric conditions or at the ambient operating conditions of the vehicle atmosphere contacting surface. The present invention is particularly useful for treating ozone by coating motor vehicle atmosphere contacting surfaces with suitable catalysts useful to destroy such pollutants even at ambient conditions, and at vehicle surface temperatures typically from at least 0°C, preferably from 10°C to 105°C, and more preferably from 40°C to 100°C. The percent conversion of ozone depends on the temperature and space velocity of the atmospheric air relative to the atmosphere contacting surface, and the temperature of the atmosphere contacting surface.

Accordingly, the present invention, in most preferred embodiments can result in at least reducing the ozone levels present in the atmosphere without the addition of any mechanical features or energy source to existing vehicles, particularly motor vehicles. Additionally, the catalytic reaction takes place at the normal ambient operating conditions experienced by the surfaces of these motor vehicle elements so that no changes in the construction or method of operation of the motor vehicle are required.

While the method of the present invention is generally directed to treating the atmosphere, it will be appreciated that variations of the apparatus are contemplated for use to treat volumes of air in enclosed spaces. For example, a motor vehicle having an atmosphere contacting surface supporting a pollutant treating composition can be used to treat the air within factories, mines and tunnels. Such apparatus can include vehicles used in such environments.

It is preferred to coat areas of the vehicle that have a relatively high surface area exposed to a large flow rate of atmospheric air as the motor vehicle is driven through the environment. For land use motor vehicles, particularly preferred atmosphere contacting surfaces include the radiator, fan blades, the air conditioning condenser or heat exchanger, air charge cooler, engine oil cooler, transmission oil cooler, and wind deflectors of the type used on the roof of truck cabs.

Most preferably, the atmosphere contacting surface is a surface of a radiator. The radiator has a large surface area for enhanced cooling of internal combustion engine fluid coolants. By applying a catalyst to be supported on the radiator surface, advantage can be taken of the large honeycomb-like surface area, usually with little or no effect on the cooling function of the radiator. The high honeycomb-like surface area enables a maximization of contact of the catalyst with the air passing through the honeycomb-like design of the radiator. Additionally, radiators in many automobiles are located behind the air conditioner condenser and are thereby protected by the air conditioner condenser.

The present invention includes methods to coat pollutant treating compositions on to atmosphere contacting surfaces of motor vehicles. In particular, the present invention includes a method to coat catalyst compositions onto finned elements such as radiators, air conditioner condensers, and air charge coolers.

Calculations suggest that in motor vehicle traffic congested areas, there are a sufficient number of motor vehicles to significantly impact pollutants treated in accordance with the present invention. For example, in Southern California's South Coast Air Quality Management District, there are approximately eight million cars. It has been calculated that if each car travels 20 miles per day, all of the air in this region to an altitude of 100 feet can be cycled through radiators in one week.

### BRIEF DESCRIPTION OF THE DRAWINGS

Figure 1 is a side schematic view of a truck showing a grill, air conditioner condenser, electrically heated catalyst, air charge cooler, radiator, fan and engine with a wind deflector on the roof of the truck cab.
Figure 2 is a partial schematic view of a motor vehicle showing the grill, air conditioner condenser, radiator and fan.
Figure 3 is a front view of the radiator.
Figure 4 is a front view of the air conditioner condenser.
Figure 5 is a front view of a wind deflector of the type illustrated in Figure 1.
Figure 6 is a front view of the truck of Figure 1.
Figure 7 is a partial schematic sectional view of coated finned cooling element.

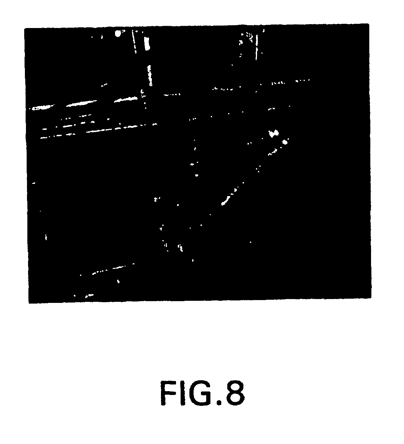

Figure 8 is a photograph of the coated radiator from Examples 1 and 2.
Figure 9 is an IR spectrum for cryptomelane.
Figure 10 is an XRD pattern for cryptomelane shown as counts using a square root scale versus the Bragg angle, 2θ.

### DETAILED DESCRIPTION OF THE PREFERRED EMBODIMENTS

The present invention relates to methods for cleaning the atmosphere useful with vehicles having means to convey the vehicle through the atmosphere. As the vehicle moves through the atmosphere, at least one atmosphere contacting surface comprising a pollutant treating composition (e.g., a catalyst or an adsorber) located thereon contacts atmospheric air. As the atmospheric air encounters the pollutant treating composition, various pollutants including particulate matter and/or gaseous pollutants carried in the air can be catalytically reacted or adsorbed by the pollutant treating composition located on the atmosphere contacting surface.

It will be appreciated by those skilled in the art that the vehicle can be any suitable vehicle which has a translation means to propel the vehicle such as wheels, sails, belts, tracks or the like. Such means can be powered by any suitable power means including engines which use fossil fuel such as gasoline or diesel fuel, ethanol, methanol, gas engines powered by fuels such as by methane gas, wind power such as by wind driving sails or propellers, solar power or electric power such as in battery operated automobiles. Vehicles include cars, trucks, buses, trains, boats, ships, airplanes, dirigibles, balloons and the like.

The **atmosphere contacting surface** can be any suitable surface that encounters and contacts air as the vehicle moves through the atmosphere. Preferably in a motor vehicle, preferably cars, trucks and buses, the contact means is a surface located toward the front of the vehicle and can contact air as the vehicle proceeds in a forward direction. Useful contact surfaces should have a relatively large surface area. Preferred contact surfaces are at least partially enclosed in the vehicle. Preferred atmosphere contacting surfaces are located under the hood and are located within the body of the motor vehicle, typically in proximity to the engine, i.e., the engine compartment. The surfaces are preferably the outer surfaces of cooling means which comprise a flow path for liquids or gases through a coolant walled enclosure such as tubes or a housing and an outer surface on which is located fins to enhance heat transfer. Useful contact surfaces include the outside surfaces of means to cool fluids, including liquids and/or gases used in the vehicle such as the air conditioner condenser, the radiator, air charge cooler, engine oil cooler, transmission oil cooler, power steering fluid cooler, the fan shroud, and the radiator fan which are all located and supported within the housing of the vehicle. A useful contact surface outside of the vehicle can be the grill typically located and supported on the front of the housing, or wind deflectors commonly supported on the roof of the cabs of large trucks. It is preferred that the contacting surface is a forward facing surface, side facing surface or surface facing the top or bottom of the vehicle. The front facing surfaces face the front of the vehicle, surfaces such as the fins of the radiator and condenser elements face the side, top and bottom of the vehicle. Even surfaces directed to face away from the front and toward the back of the vehicle which contact air can be atmosphere contacting surfaces, such as the back surface of fan blades. Surfaces of airplane engines such as wings, propellers and jet engine parts including turbine rotors and/or stators can be coated.

Preferred atmosphere contacting surfaces in motor vehicles are located on engine cooling elements such as motor vehicle radiators, air conditioner condensers, air charge coolers, also known as intercoolers or after coolers, engine oil coolers and transmission oil coolers. Such elements typically have high surface area structures associated with them to have improved heat transfer. The high surface areas are useful for maximizing the contact of the atmospheric air with the pollutant treating composition. All such elements are well known in the automotive arts. Reference is made to Bosch Automotive Handbook, Second Edition, pages 301-303, 320 and 349-351, published by Robert Bosch GmbH, 1986, herein incorporated by reference. This reference illustrates a truck diesel engine with a radiator, an intercooler and a fan. Such elements may be coated with a pollutant treating surface of the present invention. The radiator and intercooler typically operate at temperatures higher than that of the atmospheric air. Reference is also made to Taylor, The Internal Combustion Engine in Theory and Practice, Vol. 1: Thermo Dynamics, Fluid Flow, Performance, Second Edition, Rev. The MIT Press, 1985 at pages 304-306 for radiator and fin design; and page 392 for after coolers. The above pages in Taylor are herein incorporated by reference.

Reference is also made to a collection of papers in 1993 Vehicle Thermal Management Systems Conference Proceedings, SAE P:263 published by the Society of Automotive Engineers, Inc., 1993. The following papers are herein incorporated by reference. SAE Paper No. 931088 beginning at page 157 entitled, Calculation and Design of Cooling Systems by Eichlseder and Raab of Steyr Damler Puchag and Charge Air Cooler for Passenger Cars by Collette of Valeo Thermique Moteur; SAE Paper No. 931092 entitled, State of the Art and Future Developments of Aluminum Radiators for Cars and Trucks by Kern and Eitel of Behr GmbH and Co. beginning at page 187; SAE Paper 931112 entitled, Air Mix vs. Coolant Flow to Control Discharge Air Temperature and Vehicle Heating Air Conditioning Systems by Rolling and Cummings of Behr of America, Inc. and Schweizer of Behr GmbH & Co. The above papers include descriptions of radiator, air conditioner and air charge cooler structures for use in the motor vehicles. Reference is additionally made to SAE Paper 931115 entitled, Engine Cooling Module Development Using Air Flow Management Techniques by El-Bourini and Chen of Calsonic Technical Center beginning at page 379 and hereby incorporated by reference. Of interest are Appendices 1 and 2 which illustrate typical radiator and condenser structures useful in motor vehicle applications. Reference is also made to SAE Paper 931125 entitled, Durability Concerns of Aluminum Air to Air Charged Coolers by Smith, Valeo Engine Cooling Inc. which discloses air charge coolers and is hereby incorporated by reference.

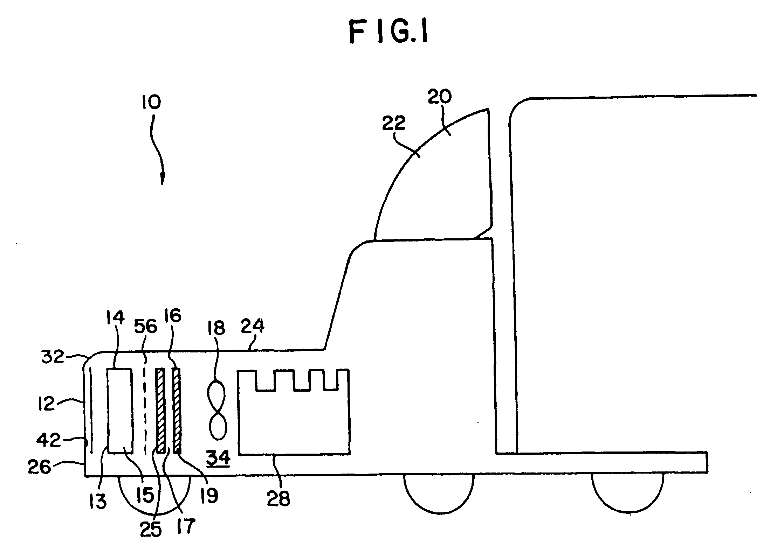

The present invention will be understood by those skilled in the art by reference to the accompanying Figures 1-7.

Figure 1 illustrates a truck 10 schematically containing a variety of vehicle components comprising atmosphere contacting surfaces. These surfaces include the surfaces of grill 12, the air conditioner condenser 14, an air charge cooler 25, the radiator 16, and the radiator fan 18. Also shown on this truck is a wind deflector 20 having a front deflecting surface 22. It is recognized that the various components can have different relative locations on different vehicles.

Referring to Figures 1 to 4 the preferred contacting surfaces include the surface of the front 13 and side 15 surfaces of the air conditioner condenser 14, the front 17 and side 19 surfaces of the radiator 16, corresponding surfaces of the air charge cooler 25 and the front 21 and back 23 surfaces of the radiator fan 18. These surfaces are located within the housing 24 of the truck. They are typically under the hood 24 of the truck between the front 26 of the truck and the engine 28. The air conditioner condenser, air charge cooler, radiator and radiator fan can be directly or indirectly supported by housing 24 or a frame (not shown) within the housing.

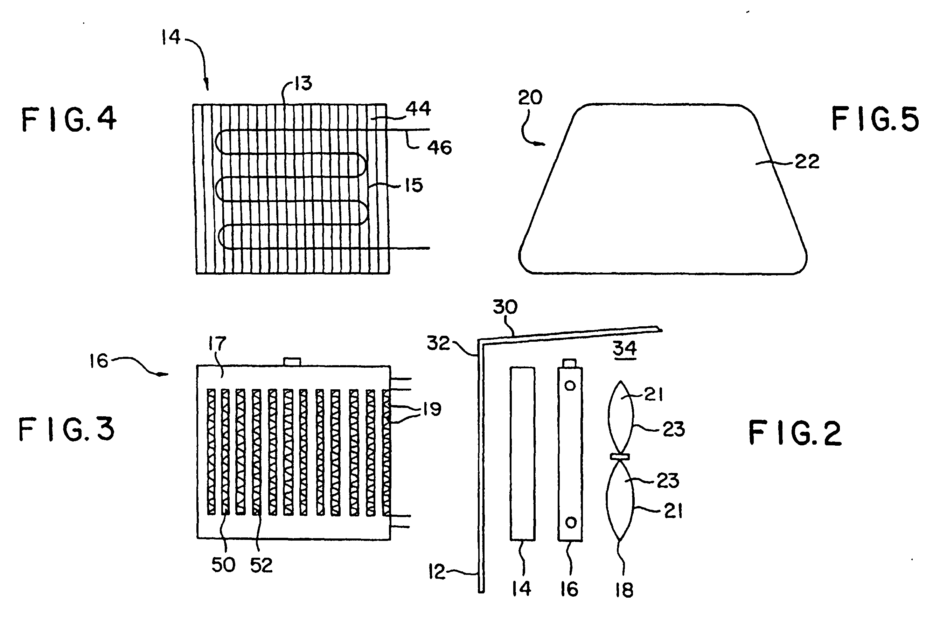

Figure 2 generally shows a schematic view of an automobile assembly. Corresponding elements in Figures 1 and 2 have common reference characters. The automobile comprises a housing 30. There is a motor vehicle front 32 having a grill 12 supported on the front of the housing 30. An air conditioner condenser 14, a radiator 16, and a radiator fan 18 can be located within the housing 30.

Referring to embodiments in Figures 1, 2 and 6, the contacting surface on the front and sides of least one of the grill 12, air conditioner condenser 14, the air charge cooler 25, and radiator 16; the front and back of the radiator fan 18; and the front of the wind deflector 20 can have a pollutant treating composition located thereon. The grill 12 can have a suitable grill grid type design which provides for openings 36 through which air passes as the truck 12 is operated and moves through the atmosphere. The openings are defined by the grill grid 38. The grill grid 38 has a front grill surface 40 and a side grill surface 42. The front and side grill grid surfaces 40 and 42 can be used as atmosphere contacting surfaces on which pollutant treating compositions are located.

Referring to Figures 1 and 4, the air conditioning condenser 14 comprises a plurality of air conditioning condenser fins 44. Additionally, there is an air conditioning fluid conduit 46 which conducts the air conditioning fluid through condenser 14. The front and side surfaces of the air conditioning fins 44, as well as the front surface of the air conditioning conduit 46 can be the atmosphere contacting surfaces on which a pollutant treating composition is located. As indicated, both the front 21 and back 23 surfaces of the radiator fan 18 can be a contacting surface to support a pollutant treating composition.

The most preferred atmosphere contacting surface is on radiator 16 as shown in Figure 3. A typical radiator 16 has a frontal radiator surface 17 as well as a plurality of radiator corrugated plates or fins 50 located in corresponding radiator plate or fin channels 52 which pass through the radiator 16. It is preferred to coat the front surface 17 as well as the side surfaces of the radiator plates 50 and channel 52 surfaces. The radiator is most preferred because it is located within the housing 24 or 30 and is protected from the front by at least the grill 12 and preferably an air conditioner condenser 14. In addition to air entering into the hood chamber 34 as the motor vehicle moves through the atmosphere, radiator fan 18 draws air in and through the channels 52. Therefore, the radiator 16 is located and protected by the grill 12, the air conditioner condenser 19 and is in front of the radiator fan 18. Additionally, as indicated above, the radiator has a large surface area for heat transfer purposes. In accordance with the present invention, pollutant treating composition can be effectively located on, and take advantage of, such a large surface area without significantly adversely impacting on the heat transfer function of the radiator.

The above description is particularly directed to and illustrates the use of atmosphere treating surfaces on apparatus such as radiator 16 and air conditioner condenser 14. As indicated the atmosphere contacting surface can be on other suitable means to cool engine fluids including well known articles such as the above referenced air charge cooler 25 as well as engine oil coolers, transmission oil coolers and power steering oil coolers. A commonality of all such cooling means is a housing or conduit through which the fluid passes. The housing comprises a wall having an inner surface in contact with the fluid and an outer surface typically in contact with the atmosphere within the frame of the vehicle and typically within the engine compartment. In order to efficiently transfer heat from the fluid in these various apparatus, there are fins or plates extending from the outer surface of the cooling, housing or conduit.

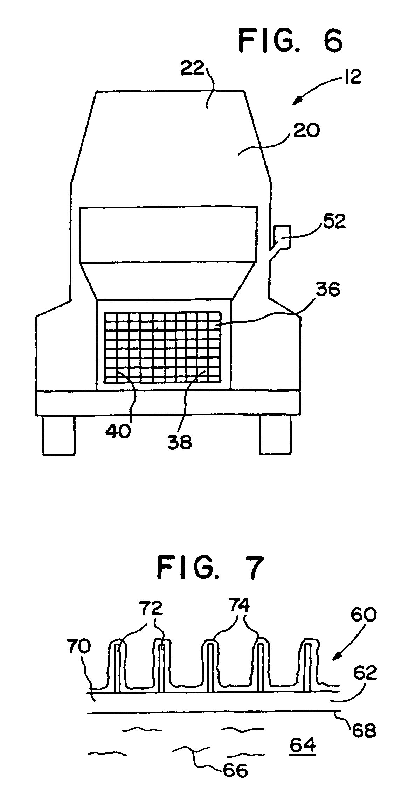

A useful and preferred embodiment with each of these cooling means is illustrated in Figure 7. Figure 7 is a schematic sectional view of a coated finned cooling element 60. The element comprises a housing or conduit defined by a housing or conduit wall 62. Located within the conduit is a passageway or chamber 64 through which fluid such as oils or cooling liquids or air conditioning fluids pass. Such fluids are shown as referenced character 66. The housing wall comprises an inner surface 68 and an outer surface 70. Located and attached to the outer surface are plates or fins 72. In accordance with the present invention, there is a pollutant treating composition 74 which can be located on the outer surface 70 and the fins or plates 72. During operation air streams contact the pollutant treating composition to cause various of the pollutants to be treated.

Applicant herein incorporates by reference commonly assigned patent application entitled, "Pollution Treating Device and Methods of Making the Same", attorney docket 3794/3810, filed as U.S. Serial No. 08/537,208. Additionally, any of the embodiments of the apparatus of the present invention and method of use thereof can optionally further incorporate a replaceable pollution treating device as disclosed therein.

Pollutant treating compositions can also be located on outer surfaces of the vehicle. As indicated, such compositions can be located on the grill 12 and in the case of the truck shown in Figures 1 and 6, on the wind deflector 20 frontal wind deflector surface 22. Additionally, pollution treatment compositions can be located on the front of the mirror 54 as well as any of a variety of front facing surfaces.

The use of an air charge cooler 25 represents a particularly effective atmosphere contacting surface on which pollutant treating compositions can be supported. The operating temperatures can reach as high as 250°F. At such temperatures, the catalyst compositions of the present invention can more effectively treat ozone, hydrocarbons, and carbon monoxide pollutants. Particularly useful are compositions containing precious metals such as platinum, palladium, gold or silver components. Alternatively, the catalyst can include manganese compounds such as manganese dioxide and copper compounds including copper oxide such Carulite or hopcalite.

During normal operation, the vehicle moves in a forward direction with the front 26 of the vehicle 10 initially contacting the atmospheric air. Typically, vehicles move through the air at velocities of up to about 1,000 miles per hour for jet planes. Land vehicles and water vehicles typically move at velocities of up to 300 miles per hour, more typically up to 200 miles per hour with motor vehicles moving at velocities up to 100 miles per hour and typically from 5 to 75 miles per hour. Seagoing vehicles, such as boats, typically move through the water at velocities up to 30 miles per hour and typically from 2 to 20 miles per hour. In accordance with method of the present invention the relative velocity (or face velocity) between the atmosphere contacting surface and the atmosphere, as the vehicle, typically an automobile or land based vehicle, moves through the atmosphere, is from 0 to 100 miles per hour, and typically from 2 to 75 miles per hour in an automobile typically from 5 to 60 miles per hour. The face velocity is the velocity of the air relative to the pollutant treating surface.

In motor vehicles such as trucks 10 which have a radiator fan 18, the fan draws atmospheric air through the grill 12, air conditioner condenser 14, air charge cooler 25 and/or radiator 16 in addition to air which passes across these elements as the motor vehicle moves through the atmosphere. When the motor vehicle is idling the relative face velocity of air drawn into the radiator typically ranges from about 5 to 15 mph. The radiator fan moderates the flow rate of air through radiator as the motor vehicle moves through the atmosphere. When a typical car is moving through the atmosphere at speeds approaching 70 mph, the inlet face velocity of air is at about 25 mph. Depending on the design of a motor vehicle using a radiator fan, cars have a face velocity as low as when the fan is used during idle up to about 100% of the face velocity corresponding to the velocity of the motor vehicle. However, typically, the face velocity of the air relative to the atmosphere contacting surface is equal to the idle face velocity plus from 0.1 to 1.0 and more typically 0.2 to 0.8 times the velocity of the vehicle.

In accordance with the present invention, large volumes of air can be treated at relatively low temperatures. This occurs as vehicles move through the atmosphere. High surface area components of vehicles including radiators, air conditioner condensers and charge air coolers typically have a large frontal surface area which encounters the air stream. However, these devices are relatively narrow, typically ranging from about 3/4 of an inch deep up to about 2 inches deep and usually in the range of 3/4 to 1 ½ inches deep. The linear velocity of the atmospheric air contacting the frontal surface of such devices is typically in the range of up to 20, and more typically 5 to 15 miles per hour. An indication of the amount of air being treated as it passes across the catalyzed vehicle component is commonly referred to space velocity or more precisely volume hourly space velocity (VHSV). This is measured as volume (corresponding to the volume of the catalyzed element) of air per hour which passes across the volume of the catalytic article. It is based on the cubic feet per hour of air divided by the cubic feet of catalyst substrate. The volume of the catalyst substrate is the frontal area times the depth or axial length in the direction of the air flow. Alternatively, volume hourly space velocity is the number of catalyst volumes based on the volume of the catalytic article being treated per hour. Because of the relatively short axial depth of the catalyzed elements of the present invention, the space velocities are relatively high. The volume hourly space velocities of air which can be treated in accordance with the present invention can be a million or more reciprocal hours. A face velocity of air against one of these elements at 5 miles per hour can result in a space velocity of as high as 300,000 reciprocal hours. In accordance with the present invention, the catalysts are designed to treat pollutants in the atmosphere at space velocities in ranges as high as from 250,000 to 750,000 and typically 300,000 to 600,000 reciprocal hours. This is accomplished even at the relatively low ambient temperatures and ambient operating temperatures of the vehicle elements containing pollutant treating compositions in accordance with the present invention.

The ambient operating temperature of the atmosphere contacting surfaces can vary depending on whether they are located in the proximity of heat sources within the vehicle or are the surfaces of elements which function to cool parts of the vehicle. However, contacting surfaces such as grill 12, wind deflector 20 are at ambient conditions. During typical operation, the means to cool operates at above ambient atmospheric temperature, with the contacting surfaces such as the surfaces of the air conditioner condenser 14, and radiator 16 and air charge cooler 25 can range up to 130°C and typically up to 105°C and are typically in the range of from 10°C to 105°C, more typically from 40°C to 100°C and can be from 10°C to 75°C. The air charge cooler 25 typically operates at temperatures of from 75° to 130°C. The amount of contacting surface can vary with air conditioner condensers, radiators and air charge coolers typically having from 20 to 2,000 square feet and fan blades 18 typically having from 0.2 to up to about 40 square feet when considering front and back surfaces.

The pollutant treating composition is a catalytic composition. Useful and preferred catalyst compositions are compositions which can catalytically cause the reaction of targeted pollutants at the space velocity of the air as it contacts the surface, and at the temperature of the surface at the point of contact. Typically, these catalyzed reactions will be in the temperature range at the atmosphere contacting surface of from 0°C to 130°C, more typically 20°C to 105°C and yet more typically from about 40°C to 100°C. There is no limit on the efficiency of the reaction as long as some reaction takes place. Preferably, there is at least a 1% conversion efficiency with as high a conversion efficiency as possible. Useful conversion efficiencies are preferably at least about 5% and more preferably at least about 10%. Preferred conversions depend on the particular pollutant and pollutant treating composition. Where ozone is treated with a catalytic composition on an atmosphere contacting surface it is preferred that the conversion efficiency be greater than about from 30% to 40%, preferably greater than 50%, and more preferably greater than 70%. These conversion rates are particularly preferred where the atmosphere contacting surface is at ambient operating conditions of up to about 110°C. These temperatures are the surface temperatures typically experienced during normal operation of atmosphere contacting surfaces of the vehicle including the surfaces of the radiator and air conditioning condenser. Where there is supplemental heating of the atmosphere contacting surface such as by having an electrically heated catalytic monolith, grid, screen, gauze or the like, it is preferred that the conversion efficiency be greater than 90% and more preferably greater than 95%. The conversion efficiency is based on the mole percent of the particular pollutants in the air which react in the presence of the catalyst composition.

**Ozone treating catalyst** compositions comprise manganese compounds including manganese dioxide, including non stoichiometric manganese dioxide (e.g., MnO_{(1.5-2.0)}), and/or Mn₂O₃. Preferred manganese dioxides, which are nominally referred to as MnO₂ have a chemical formula wherein the molar ratio of manganese to oxide is about from 1:1.5 to 1:2.0, such as Mn₈O₁₆. Up to 100 percent by weight of manganese dioxide MnO₂ can be used in catalyst compositions to treat ozone.

Useful and preferred manganese dioxides are alpha manganese dioxides nominally having a molar ratio of manganese to oxygen of from 1 to 2. Useful alpha manganese dioxides are disclosed in U.S. Patent No. 5,340,562 to O'Young, et al.; also in O'Young, Hydrothermal Synthesis of Manganese Oxides with Tunnel Structures presented at the Symposium on Advances in Zeolites and Pillared Clay Structures presented before the Division of Petroleum Chemistry, Inc. American Chemical Society New York City Meeting, August 25-30, 1991 beginning at page 342, and in McKenzie, the Synthesis of Birnessite, Cryptomelane, and Some Other Oxides and Hydroxides of Manganese, Mineralogical Magazine, December 1971, Vol. 38, pp. 493-502. For the purposes of the present invention, the preferred alpha manganese dioxide is a 2 x 2 tunnel structure which can be hollandite (BaMn₈O₁₆.xH₂O), cryptomelane (KMn₈O₁₆.xH₂O), manjiroite (NaMn₈O₁₆.xH₂O) and coronadite (PbMn₈O₁₆.xH₂O).

The manganese dioxides of the present invention have a surface area, measured by BET N₂ adsorption, of greater than 150 m²/g, more preferably greater than 200 m²/g, and more preferably greater than 220 m²/g. The upper range can be as high as 300 m²/g, 325 m²/g or even 350 m²/g. Preferred materials are in the range of 200-350 m²/g, preferably 200-275 m²/g and most preferably 220-250 m²/g. The composition comprises a binder as described below with preferred binders being polymeric binders.

It has been found that the use of compositions comprising the cryptomelane form of alpha manganese oxide, which also contain a polymeric binder can result in greater than 50%, preferably greater than 60% and most preferably from 75-85% conversion of ozone in a concentration range of from 0 to 400 parts per billion (ppb) and an air stream moving across a radiator at space velocity of from 300,000 to 650,000 reciprocal hours. Where a portion of the cryptomelane is replaced by up to 25% and preferably from 15-25% parts by weight of palladium black (PdO), ozone conversion rates at the above conditions range from 95-100% using a powder reactor.

The preferred cryptomelane manganese dioxide has from 1.0 to 3.0 weight percent potassium, typically as K₂O, and a crystallite size ranging from 2 to 10 and preferably from less than 5 nm. It can be calcined at a temperature range of from 250°C to 550°C and preferably below 500°C and greater than 300°C for at least 1.5 hours and preferably at least 2 hours up to about 6 hours.

The preferred cryptomelane can be made in accordance described in the above referenced articles and patents to O'Young and McKenzie. The cryptomelane can be made by reacting a manganese salt including salts selected from the group consisting MnCl₂, Mn(NO₃)₂, MnSO₄ and Mn(CH₃COO)₂ with a permanganate compound. Cryptomelane is made using potassium permanganate; hollandite is made using barium permanganate; coronadite is made using lead permanganate; and manjiroite is made using sodium permanganate. It is recognized that the alpha manganese useful in the present invention can contain one or more of hollandite, cryptomelane, manjiroite or coronadite compounds. Even when making cryptomelane minor amounts of other metal ions such as sodium may be present. Useful methods to form the alpha manganese dioxide are described in the above references which are incorporated by reference.

The preferred alpha manganese for use in accordance with the present invention is cryptomelane. The preferred cryptomelane is "clean" or substantially free of inorganic anions, particularly on the surface. Such anions could include chlorides, sulfates and nitrates which are introduced during the method to form cryptomelane. An alternate method to make the clean cryptomelane is to react a manganese carboxylate, preferably manganese acetate, with potassium permanganate. It has been found that the use of such a material which has been calcined is "clean". The use of material containing inorganic anions can result in conversion of ozone to oxygen of up to about 60%. The use of cryptomelane with a "clean" surface results in conversions of up about 80%.

It is believed that the carboxylates are burned off during the calcination process. However, inorganic anions remain on the surface even during calcination. The inorganic anions such as sulfates can be washed away with an aqueous solution or a slightly acidic aqueous solution. Preferably the alpha manganese dioxide is a "clean" alpha manganese dioxide. The cryptomelane can be washed at from about 60°C to 100°C for about one-half hour to remove a significant amount of sulfate anions. The washing also lowers the level of potassium present. The nitrate anions may be removed in a similar manner. The "clean" alpha manganese dioxide is characterized as having an IR spectrum as illustrated in Figure 19 and in X-ray diffraction (XRD) pattern as illustrated in Figure 20. Such a cryptomelane preferably has a surface area greater than 200 m²/g and more preferably greater than 250 m²/g. A review of the IR spectrum for the most preferred cryptomelane, shown in Figure 19 is characterized by the absence of peaks assignable to carbonate, sulfate and nitrate groups. Expected peaks for carbonate groups appear in the range of from 1320 to 1520 wavenumbers; and for sulfate groups appear in the range of from 950 to 1250 wavenumbers. Figure 20 is a powder X-ray diffraction pattern for high surface area cryptomelane prepared in Example 23. The X-ray pattern for cryptomelane useful in the present invention is characterized by broad peaks resulting from small crystallite size (~5-10nm). Approximate peak positions (±0.15°2θ) and approximate relative intensities (±5) for cryptomelane using CuK_{α} radiation as shown in Figure 20 are: 2θ/Relative Intensities - 12.1/9; 18/9; 28.3/10; 37.5/100; 41.8/32; 49.7/16; 53.8/5; 60.1/13; 55.7/38; and 68.0/23.

A preferred method of making cryptomelane useful in the present invention comprises mixing an aqueous acidic manganese salt solution with a potassium permanganate solution. The acidic manganese salt solution preferably has a pH of from 0.5 to 3.0 and can be made acidic using any common acid, preferably acetic acid at a concentration of from 0.5 to 5.0 normal and more preferably from 1.0 to 2.0 normal. The mixture forms a slurry which is stirred at a temperature range of from 50°C to 110°C. The slurry is filtered and the filtrate is dried at a temperature range of from 75°C to 200°C. The resulting cryptomelane crystals have a surface area of typically in the range of from 200 m²/g to 350 m²/g.

Another useful composition comprising manganese dioxide is a composition comprising manganese dioxide and minor amounts of silica, typically up to 2%, more typically up to 1% with preferred amounts being from 0.4 to 0.8% based on the weight of the manganese dioxide and the silica. The presence of silica in the preferred amounts has been found to effect the crystalline morphology of manganese dioxide, particularly the cryptomelane form of manganese dioxide. It is speculated that the presence of minor amounts of silica, particularly in the preferred range, may provide certain advantages to the composition of the present invention. The presence of silica is believed to make the composition more hydrophobic, particularly when used as a coating on a substrate such as a coating on a radiator. Secondly, it is believed that the presence of silica in coating compositions comprising manganese dioxide increases the pH to help the compatibility of the manganese dioxide with latex binders. A preferred and useful composition for use as a coating material comprises cryptomelane and silica. Such a material comprises cryptomelane having a surface area from 200 to 340 and preferably 220 to 250 m²/g, a weight percent of potassium of from 1 to 3% less than 0.1% sulphur and a measured loss on ignition of 13 to 18% by weight primarily due to moisture. The pH of the composition is about 3. surface area is measured by a BET nitrogen adsorption and desorption test. As the amount of sulphur is reduced, the pH typically increases slightly. Additionally, typically the pH increases with the amount of potassium present with preferred amounts of potassium being from 1.2 to 2.8 weight percent.

Various useful and preferred pollutant treating catalyst compositions can comprise a suitable support material such as'a refractory oxide support. The preferred refractory oxide can be selected from the group consisting of silica, alumina, titania, ceria, zirconia and chromia, and mixtures thereof. More preferably, the support is at least one activated, high surface area compound selected from the group consisting of alumina, silica, titania, silica-alumina, silica-zirconia, alumina silicates, alumina zirconia, alumina-chromia and alumina-ceria. The refractory oxide can be in suitable form including bulk particulate form typically having particle sizes ranging from about 0.1 to about 100 and preferably 1 to 10 µm or in sol form also having a particle size ranging from about 1 to about 50 and preferably about 1 to about 10 nm. A preferred titania sol support comprises titania having a particle size ranging from about 1 to about 10, and typically from about 2 to 5 nm.

Also useful as a preferred support is a coprecipitate of a manganese oxide and zirconia. This composition can be made as recited in U.S. Patent No. 5,283,041 incorporated herein by reference. Briefly, this coprecipitated support material preferably comprises in a ratio based on the weight of manganese and zirconium metals from 5:95 to 95:5; preferably 10:90 to 75:25; more preferably 10:90 to 50:50; and most preferably from 15:85 to 50:50. A useful and preferred embodiment comprises a Mn:Zr weight ratio of 20:80. U.S. Patent No. 5,283,041 describes a preferred method to make a coprecipitate of a manganese oxide component and a zirconia component. As recited in U.S. Patent No. 5,283,041 a zirconia oxide and manganese oxide material may be prepared by mixing aqueous solutions of suitable zirconium oxide precursors such as zirconium oxynitrate, zirconium acetate, zirconium oxychloride, or zirconium oxysulfate and a suitable manganese oxide precursor such as manganese nitrate, manganese acetate, manganese dichloride or manganese dibromide, adding a sufficient amount of a base such as ammonium hydroxide to obtain a pH of 8-9, filtering the resulting precipitate, washing with water, and drying at 450°-500°C.

A useful support for a catalyst to treat ozone is selected from a refractory oxide support, preferably alumina and silica-alumina with a more preferred support being a silica-alumina support comprising from about 1% to 10% by weight of silica and from 90% to 99% by weight of alumina.

Useful refractory oxide supports for a catalyst comprising a platinum group metal to treat carbon monoxide are selected from alumina, titania, silica-zirconia, and manganese-zirconia. Preferred supports for a catalyst composition to treat carbon monoxide is a zirconia-silica support as recited in U.S. Patent No. 5,145,825, a manganese-zirconia support as recited in U.S. Patent No. 5,283,041 and high surface area alumina. Most preferred for treatment of carbon monoxide is titania. Reduced catalysts having titania supports resulted in greater carbon monoxide conversion than corresponding non reduced catalysts.

The support for catalyst to treat hydrocarbons, such as low molecular weight hydrocarbons, particularly low molecular weight olefinic hydrocarbons having about from two up to about twenty carbons and typically two to about eight carbon atoms, as well as partially oxygenated hydrocarbons is preferably selected from refractory metal oxides including alumina and titania. As with catalysts to treat carbon monoxide reduced catalysts results in greater hydrocarbon conversion. Particularly preferred is a titania support which has been found useful since it results in a catalyst composition having enhanced ozone conversion as well as significant conversion of carbon monoxide and low molecular weight olefins. Also useful are high surface area, macroporous refractory oxides, preferably alumina and titania having a surface area of greater than 150 m²/g and preferably ranging from about 150 to 350, preferably from 200 to 300, and more preferably from 225 to 275 m²/g; a porosity of greater than 0.5 cc/g, typically ranging from 0.5 to 4.0 and preferably about from 1 to 2 cc/g measured based on mercury porosometry; and particle sizes range from 0.1 to 10 µm. A useful material is Versal GL alumina having a surface area of about 260 m²/g, a porosity of 1.4 to 1.5 cc/g and supplied by LaRoche Industries.

A preferred titania sol support comprises titania having a particle size ranging from about 1 to about 10, and typically from about 2 to 5 nm.

A preferred bulk titania has a surface area of about from 25 to 120 m²/g, and preferably from 50 to 100 m²/g; and a particle size of about from 0.1 to 10 µm. A specific and preferred bulk titania support has a surface area of 45-50 m²/g, a particle size of about 1 µm, and is sold by DeGussa as P-25. Useful nano particle size titanium comprises having a particle size ranging from about 5 to 100 and typically greater 10 to about 50 nm.

A preferred silica-zirconia support comprises from 1 to 10 percent silica and 90 to 99 percent zirconia. Preferred support particles have high surface area, e.g. from 100 to 500 square meters per gram (m²/g) surface area, preferably from 150 to 450 m²/g, more preferably from 200 to 400 m²/g, to enhance dispersion of the catalytic metal component or components thereon. The preferred refractory metal oxide support also has a high porosity with pores of up to about 145 nm radius, e.g., from about 0.75 to 1.5 cubic centimeters per gram (cm³/g), preferably from about 0.9 to 1.2 cm³/g, and a pore size range of at least about 50% of the porosity being provided by pores of 5 to 100 nm in radius.

The pollutant treating compositions of the present invention comprise a binder which acts to adhere the composition and to provide adhesion to the atmosphere contacting surface. It has been found that a preferred binder is a polymeric binder used in amounts of from 0.5 to 20, more preferably 2 to 10, and most preferably to 2 to 5 percent by weight of binder based on the weight of the composition. Preferably, the binder is a polymeric binder which can be a thermosetting or thermoplastic polymeric binder. The polymeric binder can have suitable stabilizers and age resistors known in the polymeric art. The polymer can be a plastic or elastomeric polymer. Most preferred are thermosetting, elastomeric polymers introduced as a latex into the catalyst into a slurry of the catalyst composition, preferably an aqueous slurry. Upon application of the composition and heating the binder material can crosslink providing a suitable support which enhances the integrity of the coating, its adhesion to the atmosphere contacting surface and provides structural stability under vibrations encountered in motor vehicles. The use of preferred polymeric binder enables the pollutant treating composition to adhere to the atmosphere contacting surface without the necessity of an undercoat layer. The binder can comprise water resistant additives to improve water resistance and improve adhesion. Such additives can include fluorocarbon emulsions and petroleum wax emulsions.

Useful polymeric compositions include polyethylene, polypropylene, polyolefin copolymers, polyisoprene, polybutadiene, polybutadiene copolymers, chlorinated rubber, nitrile rubber, polychloroprene, ethylene-propylene-diene elastomers, polystyrene, polyacrylate, polymethacrylate, polyacrylonitrile, poly(vinyl esters), poly(vinyl halides), polyamides, cellulosic polymers, polyimides, acrylics, vinyl acrylics and styrene acrylics, poly vinyl alcohol, thermoplastic polyesters, thermosetting polyesters, poly(phenylene oxide), poly(phenylene sulfide), fluorinated polymers such as poly(tetrafluoroethylene) polyvinylidene fluoride, poly(vinylfluoride) and chloro/fluoro copolymers such as ethylene chlorotrifluoroethylene copolymer, polyamide, phenolic resins and epoxy resins, polyurethane, and silicone polymers. A most preferred polymeric material is an acrylic polymeric latex as described in the accompanying examples.

Particularly preferred polymers and copolymers are vinyl acrylic polymers and ethylene vinyl acetate copolymers. A preferred vinyl acrylic polymer is a cross linking polymer sold by National Starch and Chemical Company as Xlink 2833. It is described as a vinyl acrylic polymer having a Tg of -15°C, 45% solids, a pH of 4.5 and a viscosity of 300 cps. In particular, it is indicated to have vinyl acetate CAS No. 108-05-4 in a concentration range of less than 0.5 percent. It is indicated to be a vinyl acetate copolymer. Other preferred vinyl acetate copolymers which are sold by the National Starch and Chemical Company include Dur-O-Set E-623 and Dur-O-Set E-646. Dur-O-Set E-623 is indicated to be ethylene vinyl acetate copolymers having a Tg of 0°C, 52% solids, a pH of 5.5 and a viscosity of 200 cps. Dur-O-Set E-646 is indicated to be an ethylene vinyl acetate copolymer with a Tg of -12°C, 52% solids, a pH of 5.5 and a viscosity of 300 cps. A useful and preferred binder is a crosslinking acrylic copolymer sold by National Starch and Chemical Company as X-4280. It is described as a milk white aqueous emulsion having a pH of 2.6; a boiling point of 212°F, a freezing point of 32°F; a specific gravity of 1.060; a viscosity of 100 cps.

An alternate and useful binding material is the use of a zirconium compound. Zirconyl acetate is preferred zirconium compound used. It is believed that zirconia acts as a high temperature stabilizer, promotes catalytic activity, and improves catalyst adhesion. Upon calcination, zirconium compounds such as zirconyl acetate are converted to ZrO₂ which is believed to be the binding material. Various useful zirconium compounds include acetates, hydroxides, nitrates, etc. for generating ZrO₂ in catalysts. In the case of using zirconyl acetate as a binder for the present catalysts, ZrO₂ will not be formed unless the radiator coating is calcined. Since good adhesion has been attained at a "calcination" temperature of only 120°C, it is believed that the zirconyl acetate has not decomposed to zirconium oxide but instead has formed a cross linked network with the pollutant treating material such as Carulite® particles and the acetates which were formed from ball milling with acetic acid. Accordingly, the use of any zirconium containing compounds in the present catalysts are not restricted only to zirconia. Additionally, the zirconium compounds can be used with other binders such as the polymeric binder recited above.

Pollutant treating catalyst compositions of the present invention can be prepared in any suitable process. A preferred composition to treat ozone using manganese dioxide as the catalyst can be made using about 1,500 g of manganese dioxide which is mixed with 2,250 g of deionized water and 75 g of acetic acid. The mixture is combined in a 1 gallon ballmill and ballmilled for about 4 hours until approximately 90% of the particles are less than 8 micrometers. The ballmill is drained and 150 g of polymeric binder is added. The mixture is then blended on a rollmill for 30 minutes. The resulting mixture is ready for coating onto a suitable substrate such as an automobile radiator according to the methods described below.

It has been found that compatibility of the components of a slurry comprising a catalytic material and a polymeric binder, such as a latex emulsion, is desirable to maintain slurry stability and uniformity. For the purpose of the present invention compatibility means that the binder and the catalytic material remain as a mixture of separate particles in the slurry. It is believed that where the polymeric binder is a latex emulsion and the catalytic material have electrical charges which cause them to repel each other, they are compatible and the slurry is stable and has a uniform distribution of the catalytic material and the polymer latex in the liquid vehicle, e.g. aqueous fluid such as water. If the catalytic material and latex emulsion particles do not mutually repel each other, irreversible agglomeration of the latex on the catalytic material will occur. These materials are therefore incompatible and the latex comes out of the emulsion.

compatibility of a high surface area catalyst with the organic latex binder is a key property in preparing a stable, uniform slurry. If the catalyst and latex emulsion particles do not mutually repel each other, irreversible agglomeration will occur. The result of this will be an unstable, non-uniform slurry which will produce a poorly adherent coating. Although the mutual repulsion of the catalyst and binder particles is controlled by a variety physical factors, surface charge plays a key role. Since latex emulsion particles are typically negatively charged, catalyst particles must be similarly charged. Zeta potential measurements have shown, however, that catalyst particles, such as MnO₂ are only slightly negatively or even positively charged, and as a result, irreversible coagulation of the catalyst and latex occurs (i.e. catalyst and latex are not compatible). It has been found that although the above described method of adding acetic acid provides certain advantages to the slurries of the present invention, such as viscosity control, it does not enhance compatibility and may even be detrimental to aged slurry stability.

Where the catalytically material is positively or slightly negatively charged, improved compatibility can be achieved by making the slurry more basic. The pH of the slurry can be controlled depending on the acidity of the catalytic material, with preferred pH levels being at least 6, preferably at least 7, more preferably at least 8.5. Generally, the slurry should not be too caustic and a preferred upper limit is about 11. A preferred range is from 8.5 to 11.

Maintaining a pH ≥8.5 of a slurry comprising a latex emulsion and MnO₂ (cryptomelane) is critical. If the pH drops below 8.5 for an extended period of time (days), the binder and catalyst will irreversibly coagulate. Despite the large negative charge on the cryptomelane particles at this pH, long term stability of cryptomelane containing slurries has been difficult to achieve. Preferred binders are poly(acrylic) acid derivative based binders with a particularly preferred binder which has long term stability under these conditions being an acrylic latex sold by National Starch as x-4280 acrylic latex. The difficulty in achieving long term compatibility even with basic slurries containing negatively charged latex and catalyst particles indicates that although surface charge is important, it is not the only factor in determining binder/catalyst compatibility. Other factors which play a role include emulsion particle size, surfactant package, etc. The present method involves raising the pH of the ball milled catalyst slurry to pH ≥ 8.5 and preferably 9 to enhance stability.

An alternative method to enhance slurry stability involves adding a surfactant such as a polymeric dispersant to the slurry instead of or in addition to increasing the pH. In the second case, binder/catalyst compatibility is achieved by adding a polymeric acrylate derived dispersant (ca. 3% solids basis) instead of increasing the pH. The result is the same, however, in that the catalyst particle is given a large negative charge which can repel the like charged latex particles. The dispersant can be added during the ball milling operation or after. Despite generating a large negative charge on the catalyst particles, not all dispersants work equally as well. Preferred dispersants comprise polymers containing carboxylic acid groups or derivatives thereof such as esters and salts. Preferred dispersants include Accusol 445 (from Rohm & Haas) and Colloid 226/35 (from Rhone-Poulenc). Useful dispersants and a review of dispersion technology are presented in, Additives for Dispersion Technology, published by Rhone-Poulenc, Surfactants & Specialties hereby incorporated by reference. Useful polymeric dispersants include but are not limited to polyacrylic acid partial sodium salts and anionic copolymer sodium salts sold by Rhone-Poulenc as Colloid™ polymeric dispersants. Again, although surface charge is an important factor in determining catalyst/binder compatibility, it is not the only factor. In general, the dispersant (particularly Colloid 226) does a good job of stabilizing the slurry since a greater variety of latex binders (e.g. acrylics, styrene acrylics, and EVA's) are compatible. Long term compatibility problems may be addressed by increasing the quantity of dispersant, raising the pH somewhat, or both.

The above recited methods enhance compatibility and result in a stable catalyst slurry. Both methods generate a large negative surface charge on the catalyst particle which in turn stabilizes the catalyst in the presence of the like charged (anionic) latex emulsion particles. For both systems, good adhesion has been observed(i.e. catalyst cannot be wiped off the face of a coated monolith) with a 10% by weight loading (solids basis) of the polymeric binder. At 5%, adhesion is not as good, so the optimum loading is probably somewhere in between.

While these methods have been shown to enhance compatability of MnO₂/latex slurries, the present invention is not limited to systems using negatively charged latex emulsions. Those skilled in the art will understand that slurry compatability can likewise be achieved using cationic latex emulsions, using cationic surfactant and/or dispersant packages to stabilize the catalyst particles.

The polymeric slurries of the present, particularly polymer latex slurries, can contain conventional additives such as thickeners, biocides, antioxidants and the like.

The pollutant treating composition can be applied to the atmosphere contacting vehicle surface by any suitable means such as spray coating, powder coating, or brushing or dipping the surface into a catalyst slurry.

The atmosphere contacting surface is preferably cleaned to remove surface dirt, particularly oils which could result in poor adhesion of the pollutant treating composition to the surface. Where possible, it is preferred to heat the substrate on which the surface is located to a high enough temperature to volatilize or burn off surface debris and oils.

Where the substrate on which there is an atmosphere contacting surface is made of a material which can withstand elevated temperatures such as an aluminum radiator, the substrate surface can be treated in such a manner as to improve adhesion to the catalyst composition, preferably the ozone carbon monoxide, and/or hydrocarbon catalyst composition. One method is to heat the aluminum substrate such as the radiator to a sufficient temperature in air for a sufficient time to form a thin layer of aluminum oxide on the surface. This helps clean the surface by removing oils which may be detrimental to adhesion. Additionally, if the surface is aluminum a sufficient layer of oxidized aluminum has been found to be able to be formed by heating the radiator in air for from 0.5 to 24 hours, preferably from 8 to 24 hours and more preferably from 12 to 20 hours at from 350°C to 500°C, preferably from 400 to 500°C and more preferably 425 to 475°C. In some cases, sufficient adhesion without the use of an undercoat layer has been attained where an aluminum radiator has been heated at 450°C for 16 hours in air. This method is particularly useful when applying the coating to new surfaces such as radiators or air conditioner condensers prior to assembly in a motor vehicle either as original equipment or replacement.

Adhesion may improve by applying an undercoat or precoat to the substrate. Useful undercoats or precoats include refractory oxide supports of the type discussed above, with alumina preferred. A preferred undercoat to increase adhesion between the atmosphere contacting surface and an overcoat of an ozone catalyst composition is described in commonly assigned U.S. Patent No. 5,422,331 herein incorporated herein by reference. The undercoat layer is disclosed as comprising a mixture of fine particulate refractory metal oxide and a sol selected from silica, alumina, zirconia and titania sols. In accordance with the method of the present invention, surfaces on existing vehicles can be coated while the substrate such as the radiator, radiator fan or air conditioner condenser is located on the vehicle. The catalyst composition can be applied directly to the surface. Where additional adhesion is desired, an undercoat can be used as recited above.

Where it is practical to separate the radiator from the vehicle, a support material such as activated alumina, silica-alumina, bulk titania, titanium sol, silica zirconia, manganese zirconia and others as recited can be formed into a slurry and coated on the substrate preferably with a silica sol to improve adhesion. The precoated substrate can subsequently be coated with soluble precious metal salts such as the platinum and/or palladium salts, and optionally manganese nitrate. The coated substrate can then be heated in an oven in air for sufficient time (0.5 to 12 hours at 350° C to 550°C) to calcine the palladium and manganese components to form the oxides thereof.

The present invention is illustrated further by the following examples which are not intended to limit the scope of this invention.

### EXAMPLES

### Example 1

This is an example of preparing high surface area cryptomelane using MnSO₄.
Molar ratios : KMnO₄ : MnSO₄ : acetic acid were 1 : 1.43 : 5.72 Molarities of Mn in solutions prior to mixing were:
0.44 M KmnO₄
0.50 M MnSO₄
FW KMnO₄ = 158.04 g/mol
FW MnSO₄•H₂O = 169.01 g/mol
FW C₂H₄O₂ = 60.0 g/mol

The following steps were conducted:
1. Made a solution of 3.50 moles (553 grams) of KMnO₄ in 8.05 L of D.I. water and heated to 68°C.
2. Made 10.5 L of 2N acetic acid by using 1260 grams of glacial acetic acid and diluting to 10.5 L with D.I. water. Density of this solution is 1.01 g/mL.
3. Weighed out 5.00 moles (846 grams) of manganous sulfate hydrate (MnSO₄•H₂O) and dissolved in 10,115 g of the above 2N acetic acid solution and heated to 40°C.
4. Added the solution from 3. to the solution from 1. over 15 minutes while continuously stirring. After addition was complete, began heating the slurry according to the following heat-up rate:
   1:06 pm 69.4°C
   1:07 pm 71.2°C
   1:11 pm 74.5°C
   1:15 pm 77.3°C
   1:18 pm 80.2°C
   1:23 pm 83.9°C
   1:25 pm 86.7°C
   1:28 pm 88.9°C
5. At 1:28 pm approximately 100 mL of slurry was removed from the vessel and promptly filtered on a Buchner funnel, washed with 2 L of D.I. water, and then dried in an oven at 100 °C. The sample was determined to have a BET Multi-Point surface area of 259 m²/g.

### Example 2

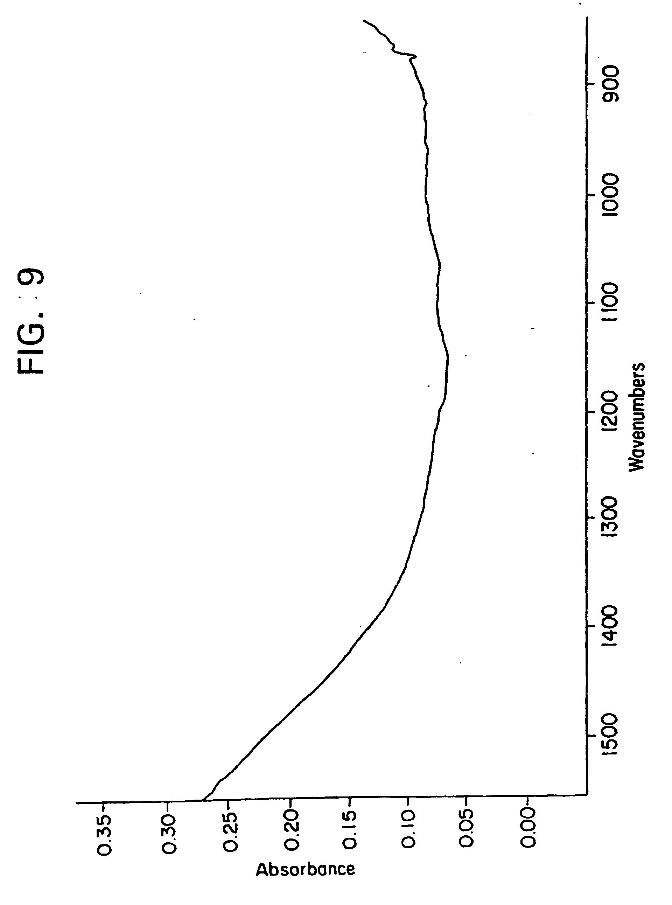

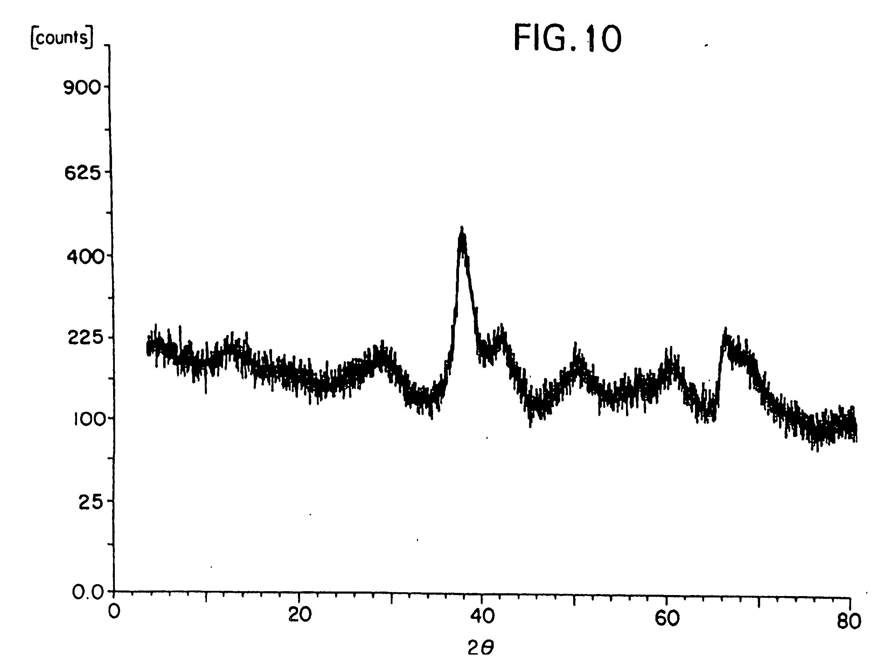

This is an example of preparing high surface area cryptomelane using Mn(CH₃COO)_{2.}
Molar ratios: KMnO₄ : Mn(CH₃CO₂)₂ : acetic acid were 1:1.43:5.72
FW KMnO₄ = 158.04 g/mol Aldrich Lot #08824MG
FW Mn(CH₃CO₂)₂•H₂O = 245.09 g/mol Aldrich Lot #08722HG
FW C₂H₄O₂ = 60.0 g/mol
1. Made a solution of 2.0 moles (316 grams) of KMnO₄ in 4.6 L of D.I. water and heated to 60°C by heating on hot plates.
2. Made up 6.0 of 2N acetic acid by using 720 grams of glacial acetic acid and diluting to 6.0 L with D.I. water. Density of this solution is 1.01 g/mL.
3. Weighed out 2.86 moles (700 grams) of manganese (II) acetate tetrahydrate [Mn(CH₃CO₂)₂•4H₂O] and dissolved in 5780 g of the above 2N acetic acid solution (in the reactor vessel). Heated to 60°C in the reactor vessel.
4. Added the solution from 1. to the solution from 3. while maintaining the slurry at 62-63°C. After complete addition, gently heated the slurry according to the following:
   82.0°C at 3:58 pm
   86.5°C at 4:02 pm
   87.0°C at 4:06 pm
   87.1°C at 4:08 pm
      shut off heat
      then quenched the slurry by pumping 10 L of D.I. water into the vessel. This cooled the slurry to 58°C at 4:13 pm.
The slurry was filtered on Büchner funnels. The resulting filter cakes were reslurried in 12 L of D.I. water then stirred overnight in a 5 gallon bucket using a mechanical stirrer. The washed product was refiltered in the morning then dried in an oven at 100°C. The sample was determined to have a BET Multi-Point surface area of 296 m²/g.
The resulting cryptomelane is characterized by the XRD pattern of Figure 10. It is expected to have an IR spectrum similar to that shown in Figure 9.

### Example 3

Following is a description of the ozone testing method for determining percent ozone decomposition used in this Example. A test apparatus comprising an ozone generator, gas flow control equipment, water bubbler, chilled mirror dew point hygrometer, and ozone detector was used to measure the percent ozone destroyed by catalyst samples. Ozone was generated in situ utilizing the ozone generator in a flowing gas stream comprised of air and water vapor. The ozone concentration was measured using the ozone detector and the water content was determined utilizing the dew point hygrometer. Samples were tested as 25°C using inlet ozone concentrations of 4.5 to 7 parts per million (ppm) in a gas stream flowing at approximately 1.5 L/minute with a dew point between 15°C and 17°C. Samples were tested as particles sized to -25/+45 mesh held between glass wool plugs in a 1/4" I.D. Pyrex® glass tube. Tested samples filled a 1 cm portion of the glass tube.

Sample testing generally required between 2 to 16 hours to achieve a steady state of conversion. Samples typically gave close to 100% conversion when testing began and slowly decreased to a "leveled off" conversation that remained steady for extended periods of time (48 hours). After a steady state was obtained, conversions were calculated from the equation: % ozone conversion = [(1-(ozone concentration after passing over catalyst)/(ozone concentration before passing over catalyst)]*100.

Ozone destruction testing on the sample of Example 22 showed 58% conversion.

Ozone destruction testing on the sample of Example 23 showed 85% conversion.

### Example 4

This example is intended to illustrate that the method of Example 2 generated "clean" high surface area cryptomelane for which the ozone destruction performance was not further enhanced by calcination and washing. A 20 gram portion of the sample represented by Example 2 was calcined in air at 200°C for 1 hour, cooled to room temperature, then washed at 100°C in 200 mL of D.I. water by stirring the slurry for 30 minutes. The resulting product was filtered and dried at 100°C in an oven. The sample was determined to have BET Multi-Point surface area of 265 m²/g. Ozone destruction testing on the sample showed 85% conversion. A comparison to the testing of the sample of Example 23 demonstrated that no benefit in ozone conversion was realized from the washing and calcination of the sample of Example 2.

### Example 5

Samples of high surface area cryptomelane were obtained from commercial suppliers and modified by calcination and/or washing. As received and modified powders were tested for ozone decomposition performance according to the method of Example 3 and characterized by powder X-ray diffraction, infrared spectroscopy, and BET surface area measurements by nitrogen adsorption.

### Example 5a

A commercially supplied sample of high surface area cryptomelane (Chemetals, Inc., Baltimore, MD) was washed for 30 minutes in D.I. water at 60°C, filtered, rinsed, and oven-dried at 100°C. Ozone conversion of the as received sample was 64% compared to 79% for the washed material. Washing did not change the surface area or crystal structure of this material (223 m²/g cryptomelane) as determined by nitrogen adsorption and powder X-ray diffraction measurements, respectively. However, infrared spectroscopy showed the disappearance of peaks at 1220 and 1320 wavenumbers in the spectrum of the washed sample indicating the removal of sulfate group anions.

### Example 5b

Commercially supplied samples of high surface area cryptomelane (Chemetals, Inc., Baltimore, MD) were calcined at 300°C for 4 hours and 400°C for 8 hours. Ozone conversion of the as received material was 44% compared to 71% for the 300°C calcined sample and 75% for the 400°C calcined sample. Calcination did not significantly change the surface area or crystal structure of the 300°C or 400°C samples (334 m²/g cryptomelane). A trace of Mn₂O₃ was detected in the 400°C sample. Calcination causes dehydroxylation of these samples. Infrared spectroscopy show a decrease in the intensity of the band between 2700 and 3700 wavenumbers assigned to surface hydroxyl groups.

### Example 6

1500g of high surface area manganese dioxide (cryptomelane purchased from Chemetals) and 2250g of deionized water were combined in a one gallon ball mill and milled for 1.5 hours to a particle size 90% ≤7um. After draining the resulting slurry from the mill into a separate 1 gallon container, sufficient KOH (20% solution in DI water) was added to raise the pH to ca. 9.5. Additional KOH was added over the next several days to maintain a pH of 9.5. Subsequently, 294g (10% solids basis) of National Starch x-4280 acrylic latex polymer (51% solids) was added. Thorough blending of the binder was achieved by rolling the container containing the slurry on a two roll mill. The container contained no milling media such as ceramic milling balls. Slurry made according to this process was coated onto a variety of substrates and exhibited excellent adhesion. Such substates included a porous monolithic support (eg. ceramic honeycomb) onto which the coating was applied by dipping the honeycomb into the slurry. The slurry was also spray coated onto an aluminum radiator. It was also dip coated on to small radiator minicores of the type recited above. Additionally, polyfiber filter media of the type used to filter air was coated by dipping or spraying. Typically, the samples were coated with loadings which could vary from 0.15 to 1.5 grams per cubic inch. The samples were air dried at 30°C until dry, typically for at least two hours. Excellent catalyst adhesion was attained in each case (i.e. coating could not be wiped off). Higher temperatures of drying (up to 150°C) can be utilized if desired. The latex cures during drying.

## Claims

1. A catalytic slurry for adhering to a substrate consisting of:
a particulate catalytically-active material consisting of a high surface area manganese dioxide wherein the molar ratio of manganese to oxygen is from 1:1.5 to 1:2.0 and having a BET N₂ surface area of greater than 150 m²/g;
a dispersant comprising at least one compound selected from the group consisting of a polymer containing carboxylic acid groups, an ester of a polymer containing carboxylic acid groups and a salt of a polymer containing carboxylic acid groups;
a polymeric binder comprising latex emulsion particles; and
water.

2. The catalytic slurry of claim 1, wherein the particulate catalytically-active material has a BET N₂ surface area of greater than 200 m²/g.

3. The catalytic slurry of claim 1, wherein approximately 90% of the particulate catalytically-active material particles are less than 8 micrometers.

4. The catalytic slurry of claim 1, wherein the manganese is an alpha manganese dioxide nominally having a molar ratio of manganese to oxygen of 1:2.

5. The catalytic slurry of claim 1, wherein the polymeric binder comprises at least one compound selected from the group consisting of an acrylic polymer and a poly(vinyl) acetate.

6. The catalytic slurry of claim 1, wherein the dispersant is a polymeric acrylate.

7. A method of forming a slurry consisting in the steps of:
forming a mixture comprising water and a particulate catalytically-active material, the catalytically-active material consisting of a high surface area manganese dioxide wherein the molar ratio of manganese to oxygen is from 1:1.5 to 1:2.0 and having a BET N₂ surface area of greater than 150 m²/g;
adding to the mixture a dispersant comprising at least one compound selected from the group consisting of a polymer containing carboxylic acid groups, an ester of a polymer containing carboxylic acid groups and a salt of a polymer containing carboxylic acid groups;
adding to the mixture a polymeric binder comprising latex emulsion particles.

8. The method of claim 7, wherein the particulate catalytically-active material has a BET N₂ surface area of greater than 200 m²/g.

9. The method of claim 7, wherein approximately 90% of the particulate catalytically-active material particles are less than 8 micrometers.

10. The method of claim 7, wherein the manganese dioxide is an alpha manganese dioxide nominally having a molar ratio of manganese to oxygen of 1:2.

11. The method of claim 7, wherein the polymeric binder comprises at least one compound selected from the group consisting of an acrylic polymer and a poly(vinyl) acetate.

12. The method of claim 7, wherein the dispersant is a polymeric acrylate.

13. The method of claim 7, further comprising the step of adjusting the pH of the mixture to 8.5 or higher.

14. A method for cleaning the atmosphere comprising the step of applying a catalytic slurry according to any of claims 1 to 6 to an atmosphere contacting surface of a vehicle.

15. The method of claim 14, wherein the vehicle is a motor vehicle.

16. The method of claim 15, wherein the atmosphere contacting surface is a radiator.

## Patentansprüche

1. Katalytische Aufschlämmung um an einem Substrat zu haften, bestehend aus:
einem aus einzelnen Teilchen bestehenden, katalytisch aktivem Material bestehend aus einem Magandioxide mit einer hohen Oberfläche, wobei das Molverhältnis des Mangans zu dem Sauerstoff zwischen 1:1,5 bis 1:2,0 beträgt und mit einer BET N₂ Oberfläche von mehr als 150 m²/g;
einem Dispersionsmittel umfassend wenigstens eine Verbindung gewählt aus der Gruppe bestehend aus einem Polymer, welches Karbonsäuregruppen enthält, einem Ester eines Polymers, welches Karbonsäuregruppen enthält, und einem Salz eines Polymers, welches Karbonsäuregruppen enthält;
ein Polymerbindemittel umfassend Latexemulsionsteilchen; und
Wasser.

2. Katalytische Aufschlämmung nach Anspruch 1, wobei das aus einzelnen Teilchen bestehende, katalytisch aktive Material eine BET N₂ Oberfläche von mehr als 200m²/g aufweist.

3. Katalytische Aufschlämmung nach Anspruch 1, wobei ungefähr 90% der Teilchen des aus einzelnen Teilchen bestehenden, katalytisch aktiven Materials weniger als 8 µm betragen.

4. Katalytische Aufschlämmung nach Anspruch 1, wobei das Mangan ein alpha-Mangandioxid ist, welches nominell ein Molverhältnis von Mangan zu Sauerstoff von 1:2 aufweist.

5. Katalytische Aufschlämmung nach Anspruch 1, wobei das Polymerbindemittel wenigstens eine Verbindung umfasst, gewählt aus der Gruppe bestehend aus einem Acrylpolymer und einem Polyvinylacetat.

6. Katalytische Aufschlämmung nach Anspruch 1, wobei das Dispersionsmittel ein Polymeracrylat ist.

7. Verfahren zur Herstellung einer Aufschlämmung bestehend aus den Schritten:
Bilden einer Mischung umfassend Wasser und ein aus einzelnen Teilchen bestehendes, katalytisch aktives Material, wobei das katalytisch aktive Material aus einem Magandioxide mit einer hohen Oberfläche besteht, wobei das Molverhältnis des Mangans zu dem Sauerstoff zwischen 1:1,5 bis 1:2,0 beträgt und mit einer BET N₂ Oberfläche von mehr als 150m²/g;
Zugeben eines Dispersionsmittels zu der Mischung, umfassend wenigstens eine Verbindung gewählt aus der Gruppe bestehend aus einem Polymer, welches Karbonsäuregruppen enthält, einem Ester eines Polymers, welches Karbonsäuregruppen enthält und einem Salz eines Polymers, welches Karbonsäuregruppen enthält;
Zugeben eines Polymerbindemittels, welches Latexemulsionsteilchen umfasst, zu der Mischung.

8. Verfahren nach Anspruch 7, wobei das aus einzelnen Teilchen bestehende, katalytisch aktive Material eine BET N₂ Oberfläche von mehr als 200m²/g aufweist.

9. Verfahren nach Anspruch 7, wobei ungefähr 90% der Teilchen des aus einzelnen Teilchen bestehenden, katalytisch aktiven Materials weniger als 8 µm betragen.

10. Verfahren nach Anspruch 7, wobei das Mangandioxid ein Alpha-Mangandioxid ist, welches nominell ein Molverhältnis von Mangan zu Sauerstoff von 1:2 aufweist.

11. Verfahren nach Anspruch 7, wobei das Polymerbindemittel wenigstens eine Verbindung umfasst, gewählt aus der Gruppe bestehend aus einem Acrylpolymer und einem Polyvinylacetat.

12. Verfahren nach Anspruch 7, wobei das Dispersionsmittel ein Polymeracrylat ist.

13. Verfahren nach Anspruch 7, umfassend des weiteren den Schritt des Einstellens des pH-Wertes des Mischung auf 8,5 oder mehr.

14. Verfahren zur Reinigung der Atmosphäre umfassend den Schritt des Aufbringens einer katalytischen Aufschlämmung gemäß einem der Ansprüche 1 bis 6 auf eine mit der Atmosphäre in Kontakt stehende Oberfläche des Fahrzeuges.

15. Verfahren nach Anspruch14, wobei das Fahrzeug ein Kraftfahrzeug ist.

16. Verfahren nach Anspruch 15, wobei die mit der Atmosphäre in Kontakt stehende Oberfläche ein Kühler ist.

## Revendications

1. Suspension catalytique destinée à adhérer à un substrat, constituée par :
un matériau particulaire catalytiquement actif constitué par un dioxyde de manganèse ayant une grande aire de surface, dans lequel le rapport molaire du manganèse sur l'oxygène se situe dans la plage de 1:1,5 à 1:2,0, et ayant une aire de surface BET N₂ supérieure à 150 m²/g ;
un agent dispersant comprenant au moins un composé choisi dans le groupe constitué par un polymère contenant des groupes acides carboxyliques, un ester d'un polymère contenant des groupes acides carboxyliques et un sel d'un polymère contenant des groupes acides carboxyliques ;
un liant polymère comprenant des particules d'émulsion de latex ; et
de l'eau.

2. Suspension catalytique selon la revendication 1, dans laquelle le matériau particulaire catalytiquement actif a une aire de surface BET N₂ supérieure à 200 m²/g.

3. Suspension catalytique selon la revendication 1, dans laquelle environ 90% des particules de matériau particulaire catalytiquement actif ont une taille inférieure à 8 micromètres.

4. Suspension catalytique selon la revendication 1, dans laquelle le manganèse est un dioxyde de manganèse alpha ayant nominalement un rapport molaire du manganèse sur l'oxygène de 1:2.

5. Suspension catalytique selon la revendication 1, dans laquelle le liant polymère comprend au moins un composé choisi dans le groupe constitué par un polymère acrylique et un polyacétate de vinyle.

6. Suspension catalytique selon la revendication 1, dans laquelle l'agent dispersant est un acrylate polymère.

7. Procédé de formation d'une suspension, comprenant les étapes consistant à :
former un mélange comprenant de l'eau et un matériau particulaire catalytiquement actif, le matériau catalytiquement actif étant constitué par un dioxyde de manganèse ayant une grande aire de surface, dans lequel le rapport molaire du manganèse sur l'oxygène se situe dans la plage de 1:1,5 à 1:2,0, et ayant une aire de surface BET N₂ supérieure à 150 m²/g ;
ajouter au mélange un agent dispersant comprenant au moins un composé choisi dans le groupe constitué par un polymère contenant des groupes acides carboxyliques, un ester d'un polymère contenant des groupes acides carboxyliques et un sel d'un polymère contenant des groupes acides carboxyliques ;
ajouter au mélange un liant polymère comprenant des particules d'émulsion de latex.

8. Procédé selon la revendication 7, dans lequel le matériau particulaire catalytiquement actif a une aire de surface BET N₂ supérieure à 200 m²/g.

9. Procédé selon la revendication 7, dans lequel environ 90% des particules de matériau particulaire catalytiquement actif ont une taille inférieure à 8 micromètres.

10. Procédé selon la revendication 7, dans lequel le dioxyde de manganèse est un dioxyde de manganèse alpha ayant nominalement un rapport molaire du manganèse sur l'oxygène de 1:2.

11. Procédé selon la revendication 7, dans lequel le liant polymère comprend au moins un composé choisi dans le groupe constitué par un polymère acrylique et un polyacétate de vinyle.

12. Procédé selon la revendication 7, dans lequel l'agent dispersant est un acrylate polymère.

13. Procédé selon la revendication 7, comprenant en plus l'étape consistant à ajuster le pH du mélange à une valeur de 8,5 ou supérieure.

14. Procédé d'épuration de l'atmosphère, comprenant l'étape consistant à appliquer une suspension catalytique selon l'une quelconque des revendications 1 à 6 à une surface de contact avec une atmosphère d'un véhicule.

15. Procédé selon la revendication 14, dans lequel le véhicule est un véhicule à moteur.

16. Procédé selon la revendication 15, dans lequel la surface de contact avec l'atmosphère est un radiateur.
